# EUROPÄISCHE PATENTANMELDUNG

(11) **EP 1 818 212 A2**
(43) Veröffentlichungstag der Anmeldung: **15.08.2007**
(21) Anmeldenummer: 07001355.2
(22) Anmeldetag: 23.01.2007
(51) Int. Cl.: B60N 2/46

(54) **Fahrzeug-Innenausstattung und Einstellverfahren**

(30) Priorität: 09.02.2006 DE 102006005951
(71) Anmelder: Johnson Controls GmbH, 51399 Burscheid (DE)
(72) Erfinder: Stolle, Katja, 51766 Engelskirchen (DE); Wallscheid, Georg, 42719 Solingen (DE)
(74) Vertreter: Hemmelmann, Klaus

(57) **Zusammenfassung**

Eine Innenausstattung (2) für ein Fahrzeug, insbesondere für ein Kraftfahrzeug, weist einen Fahrzeugsitz und eine sich längsseits des Fahrzeugsitzes, insbesondere des Fahrersitzes (3), erstreckende Tunnelkonsole (6) auf, welche zumindest in Teilen im Fahrzeuginnenraum (1) verlagerbar angeordnet sind. Erfindungsgemäß ist vorgesehen, dass die Position der Tunnelkonsole (6) oder von Teilen derselben in Abhängigkeit von der Position des Fahrzeugsitzes veränderbar ist. Die Erfindung betrifft ferner ein Verfahren zum Einstellen einer speziellen Innenausstattung (2).

## Beschreibung

Die Erfindung betrifft eine Innenausstattung für ein Fahrzeug, insbesondere für ein Kraftfahrzeug, mit einem Fahrzeugsitz und einer sich längsseits des Fahrzeugsitzes, insbesondere des Fahrersitzes, erstreckenden Tunnelkonsole, welche zumindest in Teilen im Fahrzeuginnenraum verlagerbar angeordnet sind, sowie ein Verfahren zur Einstellung einer speziellen Innenausstattung.

### Stand der Technik

Eine gattungsgemäße Innenausstattung für ein Kraftfahrzeug ist aus der Druckschrift DE 103 34 999 A1 bekannt. Die Innenausstattung umfasst Vordersitze und eine zwischen diesen angeordnete Mittel- oder Tunnelkonsole, welche insgesamt oder in Abschnitten von einer vorderen Endposition nach hinten bis in eine hintere Endposition vor oder zwischen den Rücksitzen verstellbar ist. Die Raumausnutzung des Fahrzeuginnenraums soll durch diese Ausbildung verbessert werden. Eine Einstellung der Sitzposition hat dabei auf die Position der Tunnelkonsole im Fahrzeuginnenraum keinen Einfluss.

### Aufgabe

Der Erfindung liegt die Aufgabe zugrunde, die Abstimmung der Position von Tunnelkonsole und Fahrzeugsitz und damit den Komfort des Fahrzeugs zu verbessern.

### Lösung

Die Aufgabe wird bei einer Innenausstattung der eingangs genannten Art dadurch gelöst, dass die Position der Tunnelkonsole oder von Teilen derselben in Abhängigkeit von der Position des Fahrzeugsitzes veränderbar ist. Hierdurch ist es möglich, zu jeder Sitzposition eine vorgegeben optimierte oder individuell vorgewählte Stellung der Tunnelkonsole und darauf angeordneter Bedien- oder Komfortkomponenten herbeizuführen.

Mit Vorteil sind der Fahrzeugsitz und die Tunnelkonsole dabei mechanisch und/oder elektrisch hinsichtlich ihrer Lageveränderung im Fahrzeug miteinander wirkverbunden und in ihrer Lage zueinander derart einstellbar, dass bei einer Verlagerung des Fahrzeugsitzes eine gleichgerichtete Verlagerung der Tunnelkonsole erfolgt.

Nach einer Ausführung der Erfindung kann vorgesehen werden, dass die Position der Tunnelkonsole in Fahrtrichtung (-X-Richtung des Fahrzeugs) und/oder in vertikaler Richtung (Z-Richtung des Fahrzeugs) in Abhängigkeit von der Position des Fahrzeugsitzes in Fahrtrichtung und/oder vertikaler Richtung veränderbar ist. Dabei kann die Verlagerung von Fahrzeugsitz und Tunnelkonsole beispielsweise um den gleichen Weg erfolgen, wobei Fahrzeugsitz und Tunnelkonsole mittels eines Linearführungssystems, insbesondere einer Stellschiene, relativ zueinander einstellbar sind.

Mit besonderem Vorteil ist vorgesehen, dass die Position der Tunnelkonsole in vertikaler Richtung (Z-Richtung des Fahrzeugs) in Abhängigkeit von der Position des Fahrzeugsitzes in Fahrtrichtung (-X-Richtung des Fahrzeugs) veränderbar ist.

Nach einer besonders bevorzugten Ausführungsform der Erfindung ist wenigstens einer ersten Position des Fahrzeugsitzes oder einem ersten Fahrzeuginsassen eine erste Position der Tunnelkonsole und einer zweiten Position des Fahrzeugsitzes oder einem zweiten Fahrzeuginsassen eine zweite Position der Tunnelkonsole frei wählbar zuweisbar. Die Erkennung des Sitzinsassen kann beispielsweise durch einen personenbezogenen Zündschlüssel oder einen vom Insassen einzugebenden Code erfolgen.

Die Einstellung erfolgt vorzugsweise dadurch, dass eine erste Position des Fahrzeugsitzes und eine erste Position der Tunnelkonsole eingestellt und elektronisch gespeichert werden, dass nachfolgend eine zweite Position des Fahrzeugsitzes und eine zweite Position der Tunnelkonsole eingestellt und elektronisch gespeichert werden und dass durch Abrufen der gespeicherten Daten der Tunnelkonsole jeweils die zuvor vorgegebene Position relativ zum Fahrzeugsitz zugewiesen wird.

### Figuren

Die Figuren stellen beispielhaft und schematisch verschiedene Ausführungen der Erfindung dar.

Es zeigen:
- Fig. 1: eine Aufsicht auf einen Fahrzeuginnenraum mit einer erfindungsgemäßen Innenausstattung in verschiedenen Funktionsstellungen,
- Fig. 2 bis 4: seitliche Ansichten von Innenausstattungen nach anderen Ausbildungen der Erfindung.

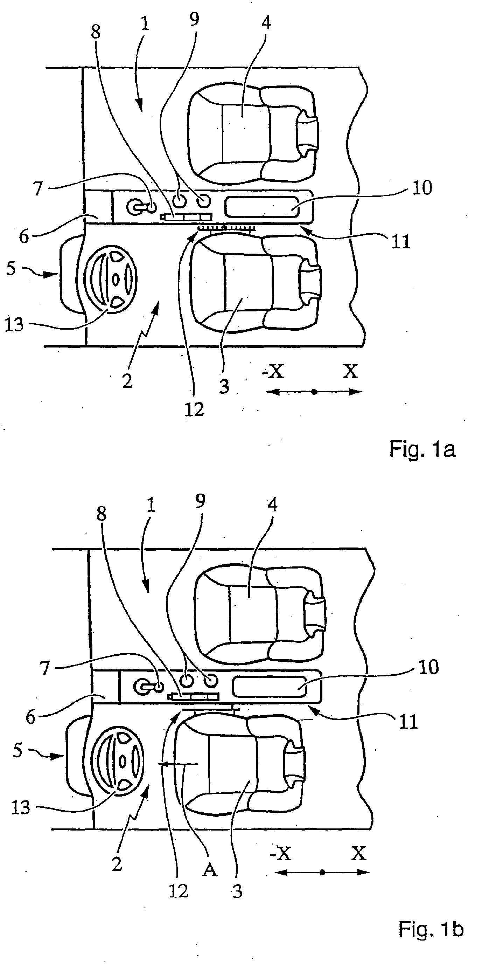

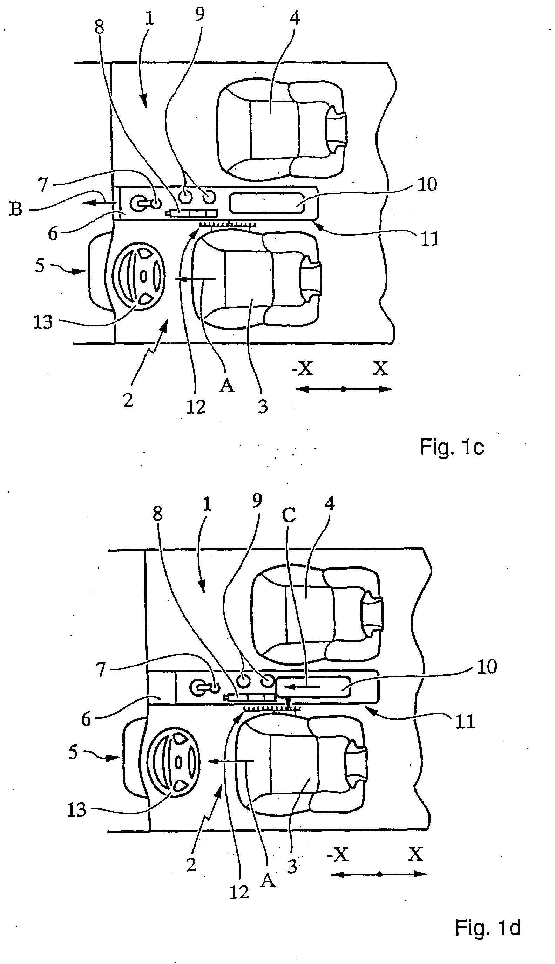

Der in Fig. 1 dargestellte Fahrzeuginnenraum 1 weist eine Innenausstattung 2 auf, die im Ausführungsbeispiel einen Fahrersitz 3, einen Beifahrersitz 4, ein Cockpit 5 und eine Tunnelkonsole 6 umfasst. Die Tunnelkonsole 6 ist mit verschiedenen Bedien- und Komfortkomponenten ausgestattet, nämlich mit einem Schalthebel 7, dem Handbremsgriff 8, Getränkehaltern 9 und einer Armauflage 10, unterhalb derer sich ein nach dem Hochklappen der Armauflage 10 zugängliches Staufach 11 befindet. Schalthebel 7 und Handbremsgriff 8 können mechanisch, vorzugsweise aber elektrisch oder elektromechanisch mit Getriebe bzw. Bremsanlage wirkverbunden sein.

Fahrersitz 3 und Beifahrersitz 4 sind in Fahrtrichtung (-X-Richtung des Fahrzeugs) sowie entgegen der Fahrtrichtung (X-Richtung des Fahrzeugs) längsverschieblich im Fahrzeuginnenraum angeordnet und können bezüglich ihrer Längsposition an die Bedürfnisse der jeweiligen Sitzinsassen angepasst werden. Auch die Tunnelkonsole 6 ist in -X bzw. X-Richtung verlagerbar. Während der Beifahrersitz 4 nicht mit der Tunnelkonsole 6 wirkverbunden ist, ist der Fahrersitz 3 mit dieser mechanisch durch eine längseinstellbare Stellschiene 12 koppelbar.

Aus der ersten Funktionsstellung nach Fig. 1a ist der Fahrersitz 3 in der Funktionsstellung nach Fig. 1 b in an sich bekannter Weise von der Tunnelkonsole 6 entkoppelt nach vorne (-X-Richtung) in eine andere Gebrauchsstellung verschoben worden (Pfeil A). Die ortsfest gebliebene Armauflage 10 befindet sich hierdurch in einer ungünstigen, da zu weit hinten angeordneten, Position.

Werden Fahrersitz 3 und Tunnelkonsole 6 hingegen miteinander gekoppelt, verstellt sich die Innenausstattung 2 aus der Stellung nach Fig. 1a durch gemeinsames, hinsichtlich Richtung und Weg gleichartiges Verschieben von Fahrersitz 3 und Tunnelkonsole 6 derart, dass die Position der Armauflage 10 relativ zum Fahrersitz 3 unverändert bleibt (Pfeile A, B in Fig. 1c).

Selbstverständlich ist es nicht erforderlich, dass die Tunnelkonsole 6 in ihrer Gesamtheit verlagert wird. Ebenso ist denkbar, nur die Armauflage 10 nach vorne zu verschieben (Pfeil C), die übrigen Komponenten hingegen in einer unveränderten Lage relativ zum Lenkrad 13 zu belassen, wie in Fig. 1d gezeigt.

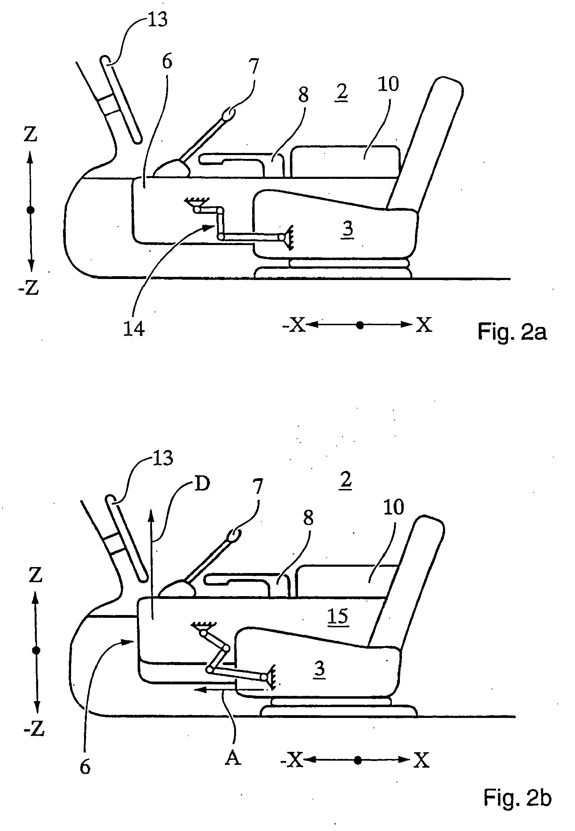

Bei der Ausführung nach Fig. 2 ist der Fahrersitz 3 weiterhin längsverstellbar im Fahrzeuginnenraum 1 angeordnet, die Tunnelkonsole 6 hingegen weist eine Verstellbarkeit nach oben (Z-Richtung des Fahrzeugs) sowie nach unten (-Z-Richtung des Fahrzeugs) auf und ist mit dem Fahrersitz 3 durch eine Hebelanordnung 14 wirkverbunden. Bei einer Verschiebung des Fahrersitzes 3 aus einer hinteren Stellung (Fig. 2a) in eine vordere Stellung (Fig. 2b) in Richtung des Pfeils A wird durch die mechanische Kopplung ein Teilstück 15 der Tunnelkonsole 6 angehoben (Pfeil D).

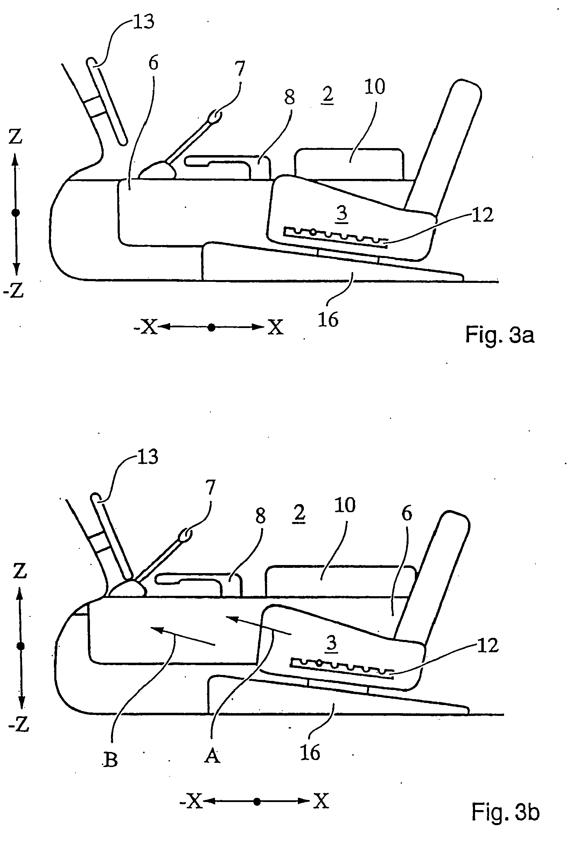

Der in Fig. 3 gezeigte Fahrersitz 3 ist auf einer schräg gestellten Rampe 16 derart geführt, dass eine nach hinten gerichtete Verschiebung auch eine Verlagerung des Fahrersitzes 3 nach unten zur Folge hat (Fig. 3a). Damit wird dem Umstand Rechnung getragen, dass ein Fahrer mit langen Beinen üblicherweise auch einen großen Oberkörper hat. Das Teilstück 15 der Tunnelkonsole 6 und der Fahrersitz 3 sind, in ihrer Lage zueinander durch die Stellschiene 12 einstellbar, so miteinander wirkverbunden, dass eine Verschiebung des Fahrersitzes 3 in -X und Z-Richtung (Pfeil A) eine hinsichtlich Weg und Richtung gleiche Verlagerung des Teilstücks 15 der Tunnelkonsole 6 bewirkt (Pfeil B).

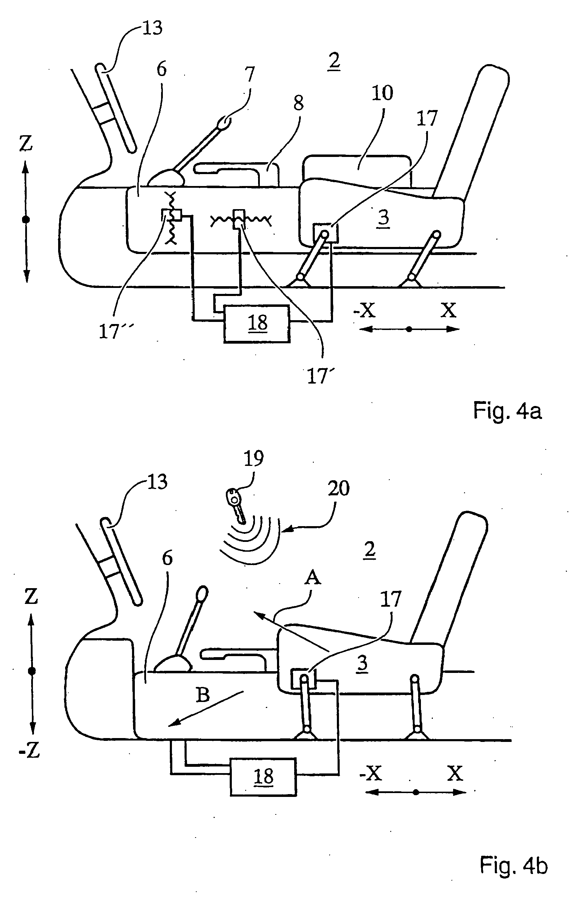

Bei der Innenausstattung 2 nach Fig. 4 sind sowohl Fahrersitz 3 als auch das Teilstück 15 der Tunnelkonsole 6 durch Antriebe 17, 17', 17" längs- und höhenverstellbar. Ein Steuergerät 18 ist dabei vom Sitzinsassen so programmierbar, dass einer ersten Sitzstellung eine erste Position des Teilstücks 15 (Fig. 4a) und einer anderen Sitzstellung eine beliebige weitere Position des Teilstücks 15 (Fig. 4b) zugewiesen werden kann. Erkennt das Steuergerät 18 aufgrund eines vom personenspezifischen Zündschlüssel 19 ausgehenden Funksignals 20 einen Sitzinsassen, verstellen die Antriebe 17, 17', 17" das Teilstück 15 der Tunnelkonsole 6 sowie den Fahrzeugsitz 3 in die zuvor von der betreffenden Person bestimmte Stellung (Pfeile A, B). Weg und Richtung der Verstellbewegungen von Teilstück 15 und Fahrersitz 3 können dabei im Rahmen der zugelassenen Verstellmöglichkeiten beliebig voneinander abweichen.

### Bezugszeichen

- 1: Fahrzeuginnenraum
- 2: Innenausstattung
- 3: Fahrersitz
- 4: Beifahrersitz
- 5: Cockpit
- 6: Tunnelkonsole
- 7: Schalthebel
- 8: Handbremsgriff
- 9: Getränkehalter
- 10: Armauflage
- 11: Staufach
- 12: Stellschiene
- 13: Lenkrad
- 14: Hebelanordnung
- 15: Teilstück (der Tunnelkonsole)
- 16: Rampe
- 17: Antrieb
- 18: Steuergerät
- 19: Zündschlüssel
- 20: Funksignal

## Patentansprüche

**1.** Innenausstattung (2) für ein Fahrzeug, insbesondere ein Kraftfahrzeug, mit einem Fahrzeugsitz und einer sich längsseits des Fahrzeugsitzes, insbesondere des Fahrersitzes (3), erstreckenden Tunnelkonsole (6), welche zumindest in Teilen im Fahrzeuginnenraum (1) verlagerbar angeordnet sind, **dadurch gekennzeichnet, dass** die Position der Tunnelkonsole (6) oder von Teilen derselben in Abhängigkeit von der Position des Fahrzeugsitzes veränderbar ist.

**2.** Innenausstattung nach Anspruch 1, **dadurch gekennzeichnet, dass** Fahrzeugsitz und Tunnelkonsole (6) mechanisch und/oder elektrisch hinsichtlich ihrer Lageveränderung im Fahrzeug miteinander wirkverbunden sind.

**3.** Innenausstattung nach Anspruch 2, **dadurch gekennzeichnet, dass** Fahrzeugsitz und Tunnelkonsole (6) in ihrer Lage zueinander einstellbar sind.

**4.** Innenausstattungsteil nach Anspruch 3, **dadurch gekennzeichnet, dass** bei einer Verlagerung des Fahrzeugsitzes eine gleichgerichtete Verlagerung der Tunnelkonsole (6) erfolgt.

**5.** Innenausstattung nach Anspruch 3, **dadurch gekennzeichnet, dass** die Position der Tunnelkonsole (6) in Fahrtrichtung (-X-Richtung des Fahrzeugs) und/oder in vertikaler Richtung (Z-Richtung des Fahrzeugs) in Abhängigkeit von der Position des Fahrzeugsitzes in Fahrtrichtung und/oder vertikaler Richtung veränderbar ist.

**6.** Innenausstattung nach Anspruch 4 oder 5, **dadurch gekennzeichnet, dass** die Verlagerung von Fahrzeugsitz und Tunnelkonsole (6) um den gleichen Weg erfolgt.

**7.** Innenausstattung nach Anspruch 6, **dadurch gekennzeichnet, dass** Fahrzeugsitz und Tunnelkonsole (6) mittels eines Linearführungssystems, insbesondere einer Stellschiene (12), relativ zueinander einstellbar sind.

**6.** Innenausstattung nach einem der vorhergehenden Ansprüche, **dadurch gekennzeichnet, dass** die Position der Tunnelkonsole (6) in vertikaler Richtung (Z-Richtung des Fahrzeugs) in Abhängigkeit von der Position des Fahrzeugsitzes in Fahrtrichtung (-X-Richtung des Fahrzeugs) veränderbar ist.

**7.** Innenausstattung, insbesondere nach einem der vorhergehenden Ansprüche, **dadurch gekennzeichnet, dass** wenigstens einer ersten Position des Fahrzeugsitzes oder einem ersten Fahrzeuginsassen eine erste Position der Tunnelkonsole (6) und einer zweiten Position des Fahrzeugsitzes oder einem zweiten Fahrzeuginsassen eine zweite Position der Tunnelkonsole frei wählbar zuweisbar ist.

**8.** Verfahren zur Einstellung einer Innenausstattung (2) nach Anspruch 7, **dadurch gekennzeichnet, dass** eine erste Position des Fahrzeugsitzes und eine erste Position der Tunnelkonsole (6) eingestellt und elektronisch gespeichert werden, dass nachfolgend eine zweite Position des Fahrzeugsitzes und eine zweite Position der Tunnelkonsole eingestellt und elektronisch gespeichert werden und dass durch Abrufen der gespeicherten Daten der Tunnelkonsole jeweils die zuvor vorgegebene Position relativ zum Fahrzeugsitz zugewiesen wird.
